# EUROPEAN PATENT APPLICATION

(11) **EP 4 506 823 A1**
(43) Date of publication of application: **12.02.2025**
(21) Application number: 22823304.5
(22) Date of filing: 25.06.2022
(51) Int. Cl.: G06F 11/36

(54) **SOFTWARE TESTING METHOD**

(30) Priority: 01.04.2022 JP 2022061451
(71) Applicant: Xtone Ltd., Tokyo 107-0062 (JP)
(72) Inventor: KATSURA, Makoto, Tokyo 107-0062 (JP)
(74) Representative: Herrero & Asociados, S.L.
(86) International application number: PCT/JP2022/025422
(87) International publication number: WO 2023/188442

(57) **Abstract**

[Problem] To provide an efficient method of detecting bugs in software user interface screens.

[Solution] **In** a method for testing software in one embodiment of the present invention, a control unit of a server terminal receives from a user terminal image data relating to a user interface screen of software to be displayed on the user terminal; extracts, based on design data stored in a memory unit of the server terminal for a reference user interface screen of software, components that divide the reference user interface screen of software; extracts components that divide the reference user interface screen of software to be displayed on the user terminal; compares the extracted components of the reference user interface screen of the software with the components of the user interface screen of the software displayed on the user terminal; and detects differences in the components.

## Description

### [Technical Field]

This invention relates to a method for testing software, and in particular to a method for detecting bugs in software user interface screens.

Recently, software functional bug detection methods have become increasingly automated in the software testing process.

For example, in Patent Literature 1, a technique is disclosed for streamlining the detection of software bugs through machine learning.

### [Prior Art Literature]

### [Patent Literature]

[Patent Literature 1] JP2018-018267A

### [Summary of Invention]

### [Technical problem]

However, although the technology disclosed in Patent Literature 1 can be an effective technology for detecting functional bugs in software, it is difficult to detect bugs on the user interface screen of software with the technology disclosed in Patent Literature 1. On the other hand, most of the bugs pointed out in the software testing process are related to bugs on the user interface screen, and there is a need to improve the efficiency of the technology for detecting bugs on the user interface screen.

Therefore, the purpose of this invention is to provide an efficient software user interface screen bug detection method.

### [Technical Solution]

**In** a method for testing software in one embodiment of the present invention, a control unit of a server terminal receives from a user terminal image data relating to a user interface screen of software to be displayed on the user terminal; extracts, based on design data stored in a memory unit of the server terminal for a reference user interface screen of software, components that divide the reference user interface screen of software; extracts components that divide the reference user interface screen of software to be displayed on the user terminal; compares the extracted components of the reference user interface screen of the software with the components of the user interface screen of the software displayed on the user terminal; and detects differences in the components.

The invention provides an efficient software user interface screen bug detection method.

### [Brief description of the drawings]

FIG. 1 is a block diagram showing a software testing system in accordance with a first embodiment of the present invention.
FIG. 2 is a functional block diagram showing the server terminal 100 of FIG. 1.
FIG. 3 is a functional block diagram showing the user terminal 200 of FIG. 1.
FIG. 4 shows an example of design data stored on the server 100.
FIG. 5 shows an example of image data stored on the server 100.
FIG. 6 shows an example of report data stored on the server 100.
FIG. 7 is a flowchart showing an example of a software testing method in accordance with the first embodiment of the present invention.
FIG. 8 is a flowchart showing an example of a design data comparison method of the software testing method of the first embodiment of the present invention.
FIG. 9 is an example of a user interface screen of software displayed on a user terminal, in accordance with the first embodiment of the present invention.
FIG. 10 is an example of image data extracted from a software user interface screen displayed on a user terminal, according to the first embodiment of the present invention.
FIG. 11 illustrates the method of comparing design data in accordance with the first embodiment of the present invention.

### [Detailed description of the embodiments]

Embodiments of the invention will be described below with reference to the drawings. The embodiments described below do not unduly limit the contents of the invention as described in the claims. Not all of the components shown in the embodiments are essential components of the invention.

### <Configuration>

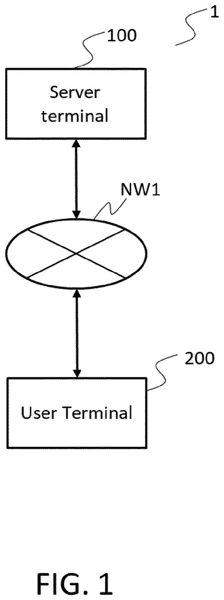

FIG. 1 is a block diagram of a software testing system. The system 1 includes a server terminal 100 associated with a business or other entity that conducts software testing, a user terminal 200 associated with an engineer or other entity that displays a software user interface screen and conducts software testing. For convenience of explanation, each terminal is described as a single one, but the number of each is not limited and may consist of multiple server terminals and user terminals.

The server terminal 100 and the user terminal 200 are each connected via a network NW1. The network NW might be comprised of the Internet, an intranet, a wireless LAN (Local Area Network) or WAN (Wide Area Network), etc.

The server terminal 100 may be a general-purpose computer, such as a workstation or personal computer, or it may be logically realized by cloud computing.

The user terminal 200 is an information processing device such as a personal computer, tablet, or smartphone terminal, for example, but it may also consist of a cell phone, PDA, etc.

**In** this embodiment, the system 1 is described as having a server terminal 100 and a user terminal 200, and users of each terminal use their respective terminals to perform operations on the server terminal 100. The server terminal itself may be equipped with a function that allows each user to operate the server terminal 100 directly.

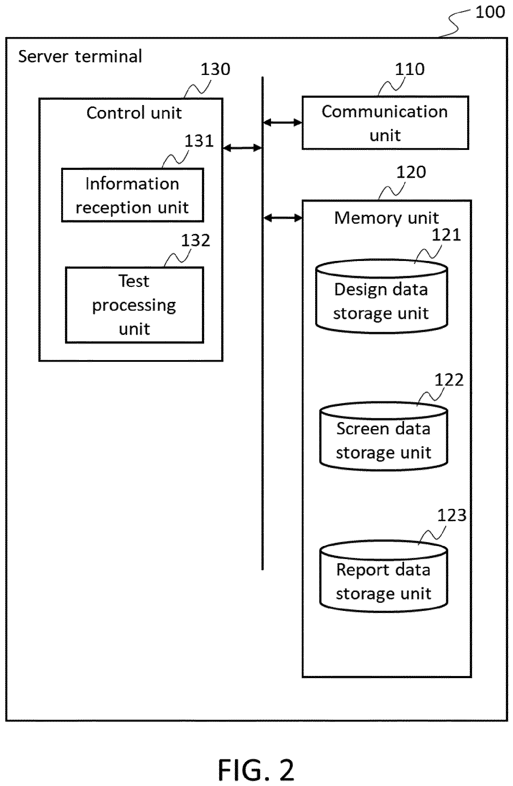

FIG. 2 is a functional block diagram of the server terminal 100 of FIG. 1. The server terminal 100 has a communication unit 110, a memory unit 120, and a control unit 130.

The communication unit 110 is a communication interface for communicating with the user terminal 200, via the network NW1, using communication protocols such as TCP/IP (Transmission Control Protocol/Internet Protocol), for example.

The memory unit 120 stores programs, input data, etc. for executing various control processes and functions in the control unit 130, and comprises RAM (Random Access Memory), ROM (Read Only Memory), etc. The memory unit 120 includes a design data storage unit 121, which stores design data related to the reference user interface screen of the software, and a screen data storage unit 122, which stores image data related to the user interface screen of the software that is transmitted from the user terminal 200 and is displayed on the user terminal 20, and a report data storage part 123 that stores report data related to software test results. A database (not shown) storing the various data may be configured outside the storage section 120 or the server terminal 100.

The control unit 130 controls the overall operation of the server terminal 100 by executing the program stored in the memory unit 120, and is comprised of a CPU (Central Processing Unit), GPU (Graphics Processing Unit), or the like. The functions of the control unit 130 include an information reception unit 131 that accepts information transmitted from the user terminal 200 and a test processing unit 132 that executes software tests based on the information transmitted from the user terminal 200. The information reception unit 131 and the test processing unit 132 are triggered by a program stored in the storage unit 120 and executed by the server terminal 100, which is a computer (electronic computer).

The information reception unit 131 receives information from the user terminal 200 via the communication unit 110. For example, it receives screenshot image data (including motion image data) of the user interface screen of the software displayed on the user terminal 200 from the user terminal 200.

Based on the image data received from the user terminal 200, the test processing unit 132 compares the transmitted image data with the image data contained in the design data, referring to the design data 1000 stored in the design data storage unit 121 of the storage unit 120, and performs predetermined processing, such as detecting differences, etc.

The control unit 130 can also have a screen generation unit, not shown, which, upon request, generates screen information to be displayed via the user interface of the user terminal 200, such as a user interface screen for software for testing and a report screen for software test results. For example, the user interface is generated by using image and text data stored in the memory unit 120 (not shown) as materials and arranging various images and texts in predetermined areas of the user interface based on predetermined layout rules. The processing related to the image generation unit can also be performed by a GPU (Graphics Processing Unit).

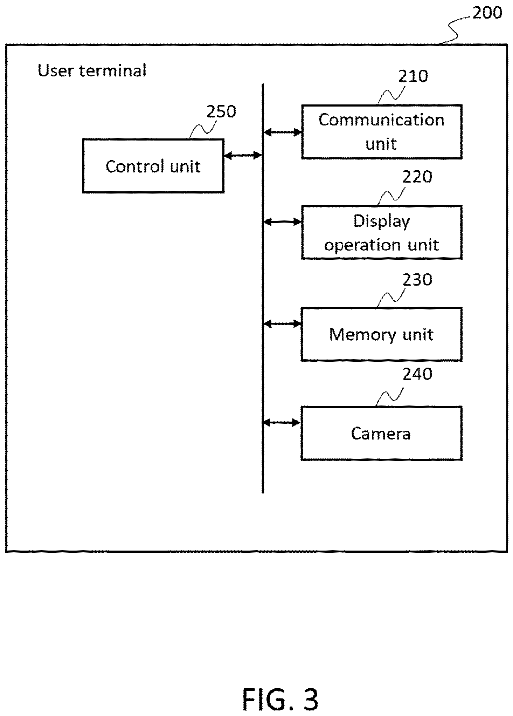

FIG. 3 is a functional block diagram showing the user terminal 200 of FIG. 1. The user terminal 200 is equipped with a communication unit 210, a display operation unit 220, a memory unit 230, a camera 240, and a control unit 250.

The communication unit 210 is a communication interface for communication with the server terminal 100 via the network NW, and communication is performed using communication protocols such as TCP/IP, for example.

The display operation unit 220 is a user interface used by the user to input instructions and display text, images, etc. in response to input data from the control unit 250, and comprises a display and keyboard or mouse when the user terminal 200 is configured as a personal computer, and a touch panel, etc. when the user terminal 200 is configured as a smartphone or tablet terminal. The display operation unit 220 is activated by a control program stored in the storage unit 230 and executed by the user terminal 200, which is a computer (electronic computer).

The memory unit 230 stores programs, input data, etc., for executing various control processes and each function within the control unit 250, and is composed of RAM, ROM, etc. The memory unit 230 temporarily stores the contents of communications with the server terminal 100.

Camera 240 is a camera built into the user terminal 200.

The control unit 250 controls the overall operation of the user terminal 200 by executing a program stored in the memory unit 230, and comprises a CPU, GPU, or the like. The control unit 250 takes a screenshot of the software user interface screen that is displayed on the user terminal 200 in this embodiment.

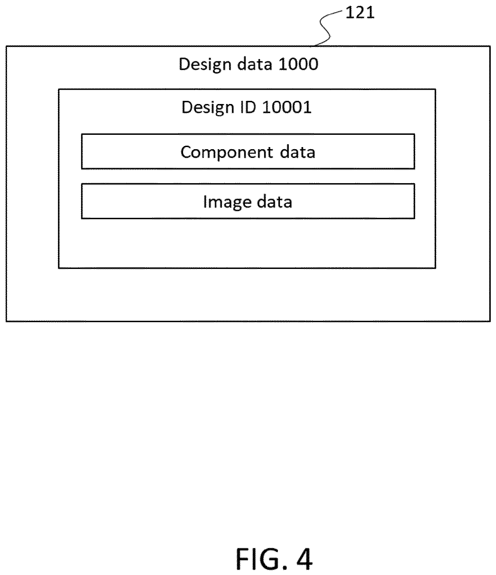

FIG. 4 shows an example of design data stored on the server 100.

Here, as design data, including reference software, image data of user interface screens of multiple software are used as input data, and typical layout templates (tile type, card type, grid type, header, footer, etc.) are learned. It is also possible to generate and record a learning model that outputs a plurality of patterns of components (tile-type display area, card-type display area, header display area, footer display area, etc.) as output data.

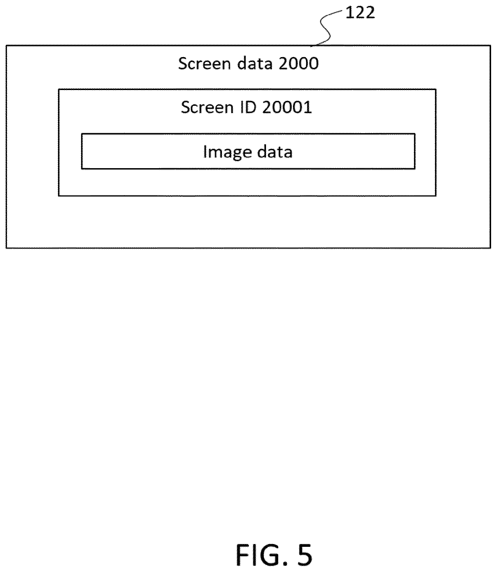

FIG. 5 shows an example of screen data stored on the server 100.

Screen data 2000 stores image data related to software user interface screens that are displayed on the user terminal 200. In FIG. 5, an example of one user interface screen (the screen identified by the screen ID "20001") is shown for convenience of explanation, but information related to multiple user interface screens can be stored. The various data associated with the user interface screen can include image data (e.g., screen shot images (including motion images) of the software user interface screen that is displayed on the user terminal 200.

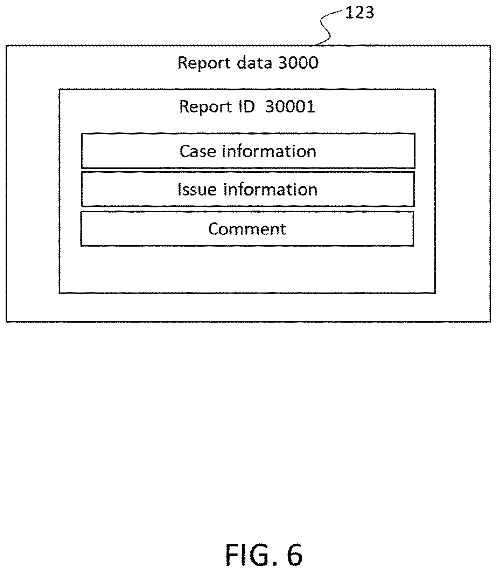

FIG. 6 shows an example of report data stored on the server 100.

Report data 3000 stores data that comprises reports related to software test results. **In** FIG. 6, for convenience of explanation, an example of a report on one test result (the report identified by the report ID "30001") is shown, but information related to multiple reports can be stored. Various data related to the report can include, for example, case information, issue information, and comment information regarding detected bugs, etc.

### <Process flow>

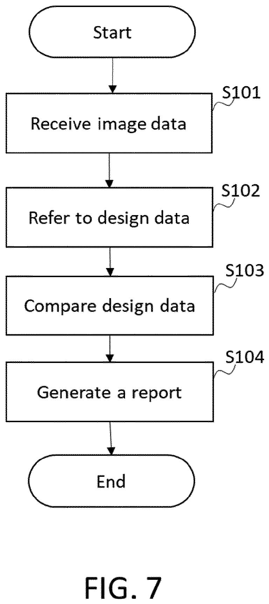

With reference to FIG. 7, the flow of the process of software testing performed by the system 1 of this embodiment is described. FIG. 7 is a flowchart showing an example of a software testing method in accordance with the first embodiment of the invention.

First, as a process preceding step S101, an engineer or other user operating the user terminal 200 to use the system 1 acquires a screenshot of the user interface screen of the software to be tested that is displayed on the user terminal 200 by taking a picture of the screen. The user accesses the server terminal 100 using a web browser or application, etc., and uploads the screenshot of the user interface screen to the server terminal 100 and transmits it.

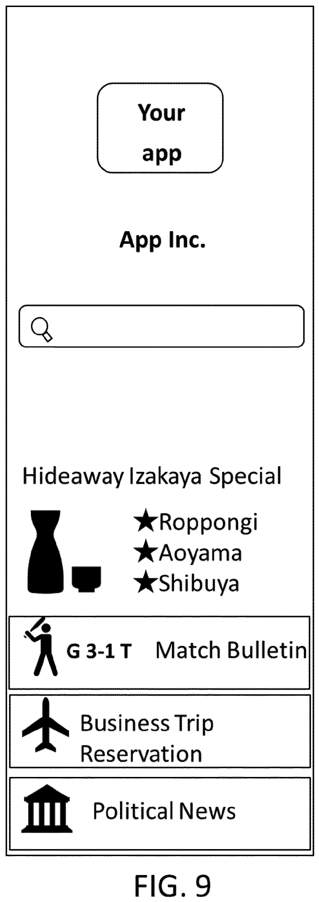

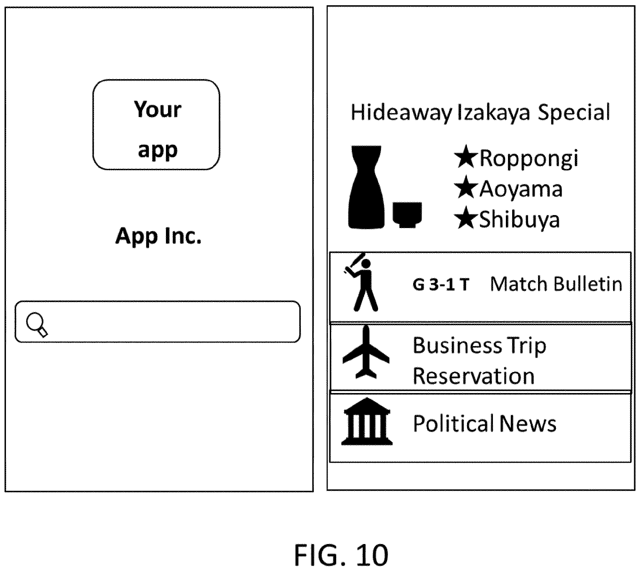

Then, as the process of step S101, the information reception unit 131 of the control unit 130 of the server terminal 100 receives image data of the user interface screen from the user terminal 200 via the communication unit 110. Here, as the image data, either motion picture format image data or still picture format image data can be received, as described above. FIG. 9 is an example of a user interface screen that is captured at the user terminal 200 and included in the image data received from the user terminal 200. If the image data received from the user terminal 200 is motion picture data and is an image of a scrolling screen, the screen can be extracted in page units, for example, as shown in FIG. 10, using image recognition technology or the like. The information reception unit 131 stores the received image data of the user interface screen in the screen data storage unit 122 of the storage unit 120.

Next, as the process of step S102, the test processing unit 132 of the control unit 130 of the server terminal 100 refers to the design data 2000 stored in the design data storage unit 121 of the storage unit 120 and identifies the design data for the reference user interface screen corresponding to the user interface screen for the received image data. Here, the test processing unit 132 can also use image recognition technology to search for and identify the corresponding design data based on the user interface screen related to the received image data.

Next, as the process of step S103, the test processing unit 132 compares the reference user interface screen of the software identified as design data with the user interface screen of the software received from the user terminal 200.

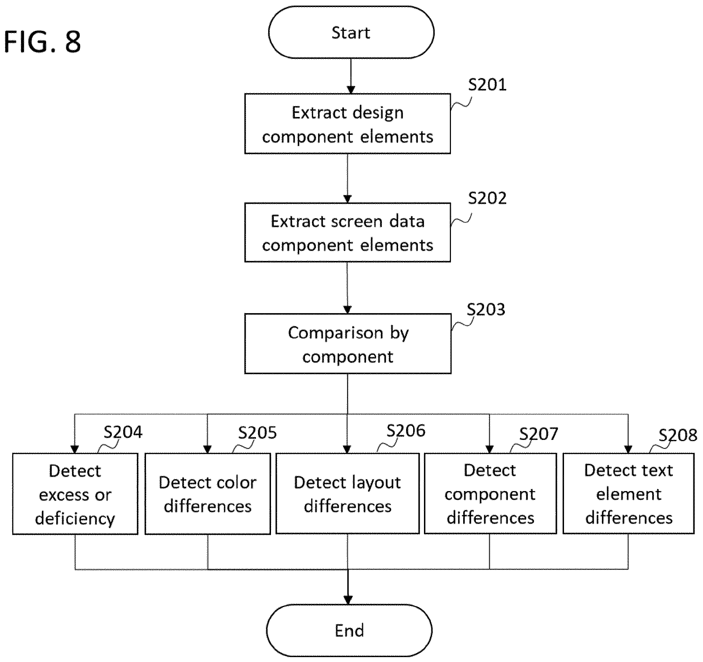

FIG. 8 is a flowchart showing the details of the user interface screen comparison process.

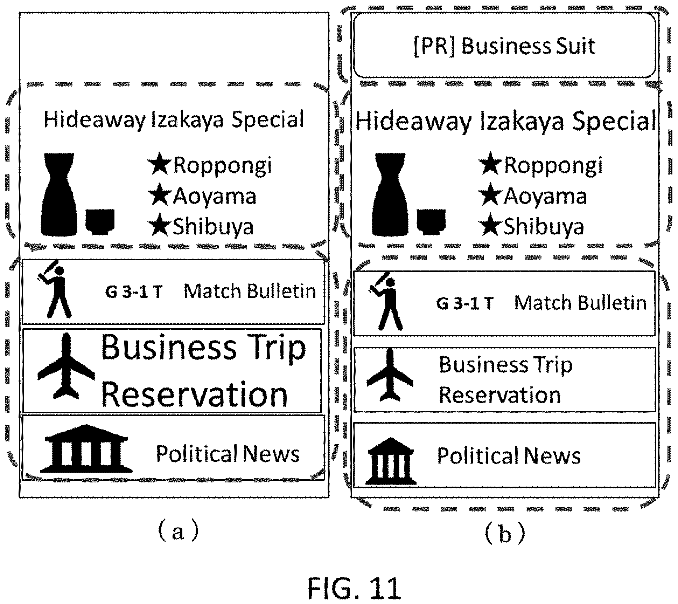

First, as the process of step S201, the test processing unit 132 extracts the component elements from the configuration data such as Sketch (registered trademark) included in the design data, and as the process of step S202, extracts the component elements from the user interface screen included in the received image data. Here, a component element is an element that is comprised of a set of graphic data, color data, and text data by dividing the user interface screen, and is comprised of a plurality of icons, text, etc. For example, a navigation, contents, sidebar, header, footer, etc. are components. As shown in FIG. 11(a), in the user interface screen displayed on the user terminal 200, the components pertaining to the display area of contents such as "Hideaway Izakaya Special" and the menu buttons such as "Match Bulletin" and "Business Trip Reservation" are examples of the components in this embodiment. When extracting the components, the component data stored in advance as design data 1000 can be used, or the components can be extracted from the configuration data such as Sketch (registered trademark) included in the design data using image recognition technology or machine learning. Similarly, the user interface screen included in the received image data can also have its components extracted by image recognition technology or machine learning. The processing of step S201 above can be omitted, and the process can immediately move to step S202.

Next, as the process of step S203, the test processing unit 132 performs a comparison between the components of the user interface screen of each of the extracted design data and received image data, and detects differences. For example, in S204, the components themselves are compared to detect excesses or deficiencies, in S205, the colors of the components are compared to detect color differences, in S206, the positions of the components are compared to detect layout differences, and in S207, the design of the component itself (line spacing, rounded corners of icons, etc.) can be compared, and, in S208, the design of text elements (thickness, size, font, etc.) can be compared to detect differences. Image recognition technology or machine learning can also be used to detect differences from comparisons between components.

Next, returning to step S104 of FIG. 7, the test processing unit 132 can store the results of the comparison of the components, comments on the differences, image data including the relevant parts, etc., as report data 3000 in the report data storage unit 123 of the storage unit 120. Based on the case information, issue information, comment information, image data, etc. stored in the report data storage unit 123, the test processing unit 132 generates a report to be displayed on the user terminal 200 in a predetermined format (spreadsheet format, etc.).

As described above, this method can improve the efficiency of on-screen bug detection by comparing the user interface screen for each of the components that make up the screen.

The above-described embodiments of the invention can be implemented in various other forms, and can be implemented with various omissions, substitutions, and modifications. These embodiments and variations, as well as omissions, substitutions and modifications, are included within the technical scope of the claims and their equivalents.

### [Description of Reference Numerals]

1 System
100 Server terminal
110 Communication section
120 Memory section
130 Control section
200 User terminal
300 User terminal
400 Research company terminal
NW1 Network

## Claims

1. A method of testing software,
wherein a control unit of a server terminal receives from a user terminal image data relating to a user interface screen of software to be displayed on the user terminal; extracts, based on design data stored in a memory unit of the server terminal for a reference user interface screen of software, components that divide the reference user interface screen of software; extracts components that divide the reference user interface screen of software to be displayed on the user terminal; compares the extracted components of the reference user interface screen of the software with the components of the user interface screen of the software displayed on the user terminal; and detects differences in the components.

2. The method of testing software according to Claim 1,
wherein the image data relating to the user interface screen of the software displayed on the user terminal includes motion picture data of a screenshot of the screen.

3. The method of testing software according to Claim 1,
wherein extracting the components comprising a divided software user interface screen displayed on the user terminal includes extracting the components based on image analysis or machine learning models.

4. The method of testing software according to Claim 1,
wherein detecting differences in the components includes extracting differences based on image analysis or machine learning models.

5. The method of testing software according to Claim 1,
wherein, furthermore, the results of the detection are generated for output in a predetermined report format.
